(19) Europäisches Patentamt
European Patent Office
Office européen des brevets

(11) EP 0 828 771 B1

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(21) Anmeldenummer: **96919711.0**

(22) Anmeldetag: **08.05.1996**

(51) Int Cl.6: **C08F 251/00**, C11D 3/37, C11D 3/22

(86) Internationale Anmeldenummer:
**PCT/EP96/01922**

(87) Internationale Veröffentlichungsnummer:
**WO 96/37530 (28.11.1996 Gazette 1996/52)**

(54) **PFROPFCOPOLYMERE AUF BASIS VON MONO-, OLIGO- UND POLYSACCHARIDEN, VERFAHREN ZU IHRER HERSTELLUNG UND IHRE VERWENDUNG**

GRAFT COPOLYMERS BASED ON MONO-, OLIGO- AND POLYSACCHARIDES, PROCESS FOR PREPARING THE SAME AND THEIR USE

COPOLYMERES GREFFES A BASE DE MONOSACCHARIDES, OLIGOSACCHARIDES ET POLYSACCHARIDES, LEUR PROCEDE DE PREPARATION ET LEUR UTILISATION

(84) Benannte Vertragsstaaten:
**AT BE CH DE DK ES FI FR GB GR IE IT LI LU NL PT SE**

(30) Priorität: **24.05.1995 DE 19518620**

(43) Veröffentlichungstag der Anmeldung:
**18.03.1998 Patentblatt 1998/12**

(73) Patentinhaber: **Degussa Aktiengesellschaft
60311 Frankfurt (DE)**

(72) Erfinder:
- **BUCHHOLZ, Stefan
D-63456 Hanau (DE)**
- **DORN, Klaus
D-63457 Hanau (DE)**
- **HARDT, Reinhold
D-63579 Freigericht (DE)**

(56) Entgegenhaltungen:
**EP-A- 0 404 377**
**WO-A-93/11214**
**WO-A-93/14227**
**US-A- 4 005 040**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 828 771 B1

Printed by Jouve, 75001 PARIS (FR)

**Beschreibung**

Die Erfindung bezieht sich auf Pfropfcopolymere auf Basis natürlicher Rohstoffe, wobei die Pfropfcopolymere durch Copolymerisation von ethylenisch ungesättigten Monomeren in Gegenwart von Sacchariden oder deren Derivaten erhältlich sind. Die Erfindung betrifft desweiteren ein Verfahren zur Herstellung derartiger Copolymerisate sowie die Verwendung der Pfropfcopolymerisate als Wasserbehandlungsmittel, Inkrustationsinhibitor und als Waschmittelzusatz, nämlich als sogenannter Cobuilder.

Aus US 3,558,499 ist die Verwendung von Copolymerisaten, die durch Pfropfung von Acrylsäure und Methacrylsäure auf Stärke oder anderen Hydroxyverbindungen erhalten werden, in Waschmitteln zur Inhibierung der Rückverschmutzung bekannt.

Eine mit Natriumacrylat gepfropfte oxidierte Stärke, eine mit Hydroxypropylmethacrylat gepfropfte oxidierte Stärke oder ein Maisstärke-Polyvinylalkohol-Pfropf-Copolymerisat werden gemäß der JP-A-55/155 097 in einer Menge von 0,05 bis 5 Gew.-% in Waschmittelformulierungen zur Unterdrückung der Wiederanschmutzung von Wäsche beim Waschen eingesetzt.

Aus EP 0 239 895 B1 sind Copolymerisate von Acrylsäure mit anderen ungesättigten Verbindungen, die durch Polymerisation in Gegenwart von zur Enolatbildung befähigten Monosacchariden hergestellt werden bekannt. In o. g. Patent wird auch die Anwendung als Cobuilder in Wasch- und Reinigungsmitteln beschrieben.

DE 40 03 172 A1 bzw. EP 0 441 197 offenbart Pfropfcopolymerisate von Monosacchariden, Oligosacchariden und Polysacchariden, die durch radikalisch initiierte Pfropfcopolymerisation erhältlich sind von

A) Monomermischungen aus

a) 90 bis 10 Gew.-% monoethylenisch ungesättigten $C_4$-bis $C_8$-Dicarbonsäuren, deren Anhydriden oder Alkali- und/oder Ammoniumsalzen,

b) 10 bis 90 Gew.-% monoethylenisch ungesättigte $C_3$-bis $C_{10}$-Carbonsäuren oder deren Alkali- und/oder Ammoniumsalzen,

c) 0 bis 40 Gew.-% anderen monoethylenisch ungesättigten Monomeren, die mit den Monomeren (a) und (b) copolymerisierbar sind, und

d) 0 bis 5 Gew.-% mindestens zwei ethylenisch ungesättigte nicht konjugierte Doppelbindungen im Molekül aufweisende Monomere

in Gegenwart von

B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- und Polysacchariden oder Mischungen der genannten Verbindungen im Gewichtsverhältnis (A) : (B) von (95 bis 20) : (5-bis 80).

Die DE 40 38 908 A1 behandelt die Verwendung von Pfropfcopolymerisaten gemäß DE 40 03 172 A1 als Cobuilder.

Aus DE 42 21 381 C1 kennt man Pfropfcopolymerisate, die durch radikalische Copolymerisation von einer ethylenisch ungesättigten Monocarbonsäure bzw. deren Salz und monoethylenisch ungesättigten sulfonsäuregruppenhaltigen Monomeren sowie ggf. weiteren wasserlöslichen Monomeren erhältlich sind. Ebenso wird die Verwendung derartiger Pfropfcopolymerisate als Cobuilder beschrieben.

Die DE 23 57 036 betrifft Polycarboxylate mit einer bestimmten biologischen Abbaubarkeit. Diese bekannten Polycarboxylate werden als Builder zum Aufbau von festen oder flüssigen Reinigungsmitteln eingesetzt. Sie werden hergestellt, indem man Acrolein allein oder in Gegenwart von Acrylsäure in Gegenwart von Thioäthylenglykol oxidativ polymerisiert.

Die DE 23 30 260 offenbart ein Verfahren zur Herstellung von Polycarboxylaten durch oxidative Polymerisation von Acrolein für sich alleine oder zusammen mit Acrylsäure, wobei die Polymerisation unter Zusatz von n-Dodecylmercaptan durchgeführt wird.

Waschmittelzusammensetzungen mit verbessertem Schmutztragevermögen unter Verwendung eines geeigneten Polycarboxylats sind Gegenstand der EP 0 609 777. Die offenbarten Co-builder werden durch Copolymerisation von Acrolein und z. B. Acrylsäure unter geeigneten Bedingungen erhalten.

G. Maher beschreibt in Polym. J. 11 (1979) 85 Pfropfcopolymere, die durch Polymerisation von Vinylmonomeren auf Stärkexanthat hergestellt werden. Als vinylische Monomere werden Acrolein, Acrylamid, Acrylsäure, Acrylnitril, Methylacrylat oder Styrol untersucht. Das jeweilige Monomer wurde dabei mit einem wässrigen System aus vollständig löslichem Stärkexanthat und Wasserstoffperoxid (bei alkalischem pH) zur Reaktion gebracht, wobei sich jeweils ein gelartiges vernetztes Produkt aus Pfropfcopolymeren in einem selbstgenerierten sauren Milieu bildete. So entstand beispielsweise mit Acrolein ein gelartiges Produkt, wobei es während der Polymerisationsreaktion zu einer heftigen Gasentwicklung unter Bildung von Blasen kam, die jedoch aufgrund der schnellen Gelbildung nicht schnell genug entweichen konnten. Dieser Effekt führte zum Vorschlag, die Reaktion und dessen Produkte bei der Schaumgummi-Herstellung einzusetzen (US-4,005,040).

Aus DE 44 17 734.8 sind Polycarboxylate bekannt, die dadurch hergestellt werden, daß man Acrolein und Vinylacetat in wäßriger Lösung in Gegenwart von Wasserstoffperoxid und gegebenenfalls weiteren Einsatzstoffen polymerisiert. Die Polymerisate weisen eine biologische Abbaubarkeit von > 30 % auf.

Aus dem Derwent-Abstract 86-085028/13 zur JP-61 031 498 sind entnehmbar Pfropfpolymere von Acrylsäure oder Maleinsäure auf Glucose, Fructose oder andere bestimmte Zucker, die als Cobuildermischungen die Waschkraft erhöhen und die biologische Abbaubarkeit verbessern sollen.

Es hat sich zwar gezeigt, daß durch die marktgängigen Produkte der Polycarboxylate die Inkrustation von Textilien bei der Wäsche vermindert werden kann, jedoch ist eine weitere Optimierung der Cobuilder anzustreben, um die Wirksamkeit der Waschmittel zu erhöhen und damit gleichzeitig die Gebrauchseigenschaften der Textilien weiter zu verbessern. Dementsprechend liegt der im folgenden beschriebenen Erfindung die Aufgabe zugrunde, Polymerisate, möglichst auf Basis von nachwachsenden Rohstoffen und von preiswerten Einsatzstoffen zur Verfügung zu stellen, die im Vergleich zu den bisher verwendeten Produkten eine verbesserte oder wenigstens gleich gute inkrustationsinhibierende Wirkung zeigen und dabei zugleich hervorragend biologisch abbaubar sind.

Die angegebene sowie weitere nicht näher genannte Aufgaben werden gelöst durch die erfindungsgemäßen wasserlöslichen Pfropfcopolymerisate von Monosacchariden, Oligosacchariden, Polysacchariden und deren Derivaten, die erhältlich sind durch radikalisch initiierte Copolymerisation von

A) Monomermischungen aus

a) mehr als 40 - 100 Gew.-% mindestens eines $\alpha,\beta$-ungesättigten Aldehyds der allgemeinen Formel I

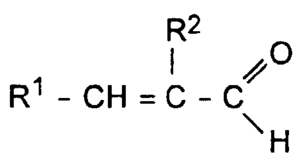

(I),

worin $R^1$ Wasserstoff oder $C_1$-$C_4$-Alkyl, linear oder verzweigt, und $R^2$ Wasserstoff oder Methyl bedeutet,

b) 0 - 60 Gew.-% von a) verschiedenen monoethylenisch ungesättigten Monomeren, die mit a) copolymerisierbar sind, und

c) 0 - 5 Gew.-% mindestens zwei ethylenisch ungesättigte, nicht konjugierte Doppelbindungen im Molekül aufweisenden Monomeren

in Gegenwart von

B) Monosacchariden, Oligosacchariden, Polysacchariden, oxidativ, hydrolytisch oder enzymatisch abgebauten Polysacchariden, chemisch modifizierten Mono-, Oligo-oder Polysacchariden oder Mischungen der genannten Verbindungen
und

C) einem oder mehreren Oxidationsmitteln,

wobei das Gewichtsverhältnis A) zu B) von (95 : 20) bis (5 : 80) reicht und das Gewichtsverhältnis von C) zu A) + B) von (5 : 100) bis (50 : 50) reicht.

Dadurch, daß die Pfropfcopolymerisate der Erfindung auf natürlichen und nachwachsenden Rohstoffen basieren, nämlich den genannten Sacchariden sowie deren Derivaten B), sind sie ökologisch wenig bedenklich und relativ preiswert. Die $\alpha,\beta$-ungesättigten Aldehyde der Formel I, die als Komponente (a) den wesentlichen Anteil der auf die

Komponente B) aufgepfropften Monomermischungen A) ausmachen, sind ebenfalls relativ preiswerte Rohstoffe, vor allem das Acrolein. Die so erhältlichen Pfropfcopolymerisate wiederum weisen eine gute inkrustationsinhibierende Wirkung auf und sind dabei zugleich hervorragend biologisch abbaubar.

Zu den erfindungsgemäß erfolgreich einsetzbaren $\alpha,\beta$-ungesättigten Aldehyden der Formel I gehören solche, worin $R^1$ Wasserstoff, Methyl, Ethyl, n-Propyl, i-Propyl, n-Butyl, i-Butyl und/oder tert.-Butyl ist, während $R^2$ Wasserstoff oder Methyl bedeutet.

Von den Verbindungen der Formel I können als Komponente (a) eine oder mehrere im Gemisch miteinander eingesetzt werden.

Als Monomere der Gruppe (a) eignen sich ganz besonders Acrolein und/oder Methacrolein. Aus ökonomischen Gründen ist der Einsatz von Acrolein besonders vorteilhaft.

Als Monomere der Gruppe (b) kommen monoethylenisch ungesättigte $C_3$- bis $C_{10}$-Monocarbonsäuren sowie deren Alkali- und/oder Ammoniumsalze in Betracht. Zu diesen Monomeren gehören beispielsweise Acrylsäure, Methacrylsäure, Ethylacrylsäure, Allylessigsäure und Vinylessigsäure. Vorzugsweise verwendet man aus dieser Gruppe von Monomeren Acrylsäure, Methacrylsäure, deren Gemische sowie die Natrium-, Kali- oder Ammoniumsalze oder deren Mischungen. Diese Monomeren werden entweder allein als Komponente (b) oder in Mischung mit monoethylenisch ungesättigten Dicarbonsäuren oder deren Anhydriden als Komponente (b) zusammen mit (a) und ggf. (c) in Gegenwart von Naturstoffen (B) unter oxidierenden Bedingungen polymerisiert. Unter oxidierenden Bedingungen wird hierbei der Einsatz eines Oxidationsmittels C) im Gewichtsverhältnis von C) zu A) + B) von (5 : 100) bis (50 : 50) verstanden, wobei C) eine ausreichende Oxidationskraft aufweist, um eine Oxidation von Carbonylgruppen sowie eine Oxidation und einen Abbau des eingesetzten Polysaccharids zu bewirken und somit eine vom Polysaccharid ausgehende Polymerisation der Mischung a) bis c) zu initiieren.

In Frage kommende ungesättigte Dicarbonsäuren enthalten 4 bis 8 C-Atome, z. B. Maleinsäure, Fumarsäure, Itaconsäure, Methylenmalonsäure, Citraconsäure, Maleinsäureanhydrid, Itaconsäureanhydrid und Methylenmalonsäureanyhdrid. Die monoethylenisch ungesättigten $C_4$- bis $C_8$-Dicarbonsäuren können in Form der freien Säuren oder in mit Alkalimetallbasen, Ammoniak oder Aminen neutralisierter Form bei der Pfropfpolymerisation eingesetzt werden. Von den in Betracht kommenden Dicarbonsäuren bzw. deren Anhydriden verwendet man vorzugsweise Maleinsäure, Maleinsäureanhydrid, Itaconsäure oder Itaconsäureanhydrid sowie die Natrium-, Kali- oder Ammoniumsalze von Maleinsäure oder Itaconsäure. Diese Salze sind beispielsweise aus Maleinsäureanhydrid oder Itaconsäureanhydrid erhältlich, wenn man die genannten Anhydride in wäßriger Lösung mit Natronlauge, Kalilauge oder Ammoniak bzw. Aminen neutralisiert.

Ebenfalls zu den Monomeren der Gruppe (b), die bei der Pfropfcopolymerisation gegebenenfalls eingesetzt werden können, gehören beispielsweise $C_1$- bis $C_6$-Alkyl- und Hydroxyalkylester der genannten Verbindungen, z. B. Methylacrylat, Ethylacrylat, n-Butylacrylat, Methylmethacrylat, Maleinsäuremonomethylester, Maleinsäurediethylester, Hydroxyethylacrylat, Hydroxypropylacrylate, Hydroxybutylacrylate, Hydroxyethylmethacrylat und Hydroxypropylmethacrylat. Außerdem kommen die Amide und N-substituierten Alkylamide der genannten Verbindungen als Monomere der Gruppe (b) in Betracht, z. B. Acrylamid, Methacrylamid, N-Alkylacrylamide mit 1 bis 18 C-Atomen in der Alkylgruppe, wie beispielsweise N-Methylacrylamid, N-Dimethylacrylamid, N-tert.-Butylacrylamid, N-Octadecylacrylamid, Maleinsäuremonoethylhexylamid, Maleinsäuremonododecylamid, Dimethylaminopropylmethacrylamid und Acrylamidoglykolsäure. Ebenso eignen sich als Monomer (b) Alkylaminoalkyl(meth)acrylate, z. B. Dimethylaminoethylacrylat, Dimethylaminoethylmethacrylat, Diethylaminoethylacrylat, Diethylaminoethylmethacrylat, Dimethylaminopropylacrylat und Dimethylaminopropylmethacrylat.

Außerdem eignen sich als Monomere der Gruppe (b) Sulfonsäuregruppen enthaltende Monomere, wie beispielsweise Vinylsulfonsäure, Allylsulfonsäure, Methallylsulfonsäure, Styrolsulfonsäure, Acrylsäure-3-sulfopropylester, Methacrylsäure-3-sulfopropylester und Acrylamidomethylpropansulfonsäure sowie Phosphonsäuregruppen enthaltende Monomere, wie beispielsweise Vinylphosphonsäure, Allylphosphonsäure und Acrylamidomethylpropanphosphonsäure. Zu dieser Gruppe von Monomeren gehören außerdem N-Vinylpyrrolidon, N-Vinylcaprolactam, N-Vinylformamid, N-Vinyl-N-methylformamid, 1-vinylimidazol, 1-vinyl-2-methylimidazol, Vinylacetat und Vinylpropionat. Als Monomere der Gruppe (b) eignen sich außerdem die Ester von alkoxylierten $C_1$- bis $C_{18}$-Alkoholen, die mit 2 bis 50 Mol Ethylenoxid, Propylenoxid, Butylenoxid oder Mischungen davon umgesetzt sind, mit den monoethylenisch ungesättigten Carbonsäuren der Gruppe (a), z. B. die Ester der Acrylsäure, Methacrylsäure oder Maleinsäure mit einem $C_{13}/C_{15}$-Oxoalkohol, der mit unterschiedlichen Mengen an Ethylenoxid zur Reaktion gebracht wurde, z. B. 3 Mol, 5 Mol, 7 Mol, 10 Mol oder 30 Mol Ethylenoxid.

Von den Estern der Dicarbonsäuren kommen sowohl die Mono-als auch die Diester in Betracht.

Die basischen Monomeren wurden vorzugsweise in Form der Salze mit Mineralsäuren, z. B. Salzsäure, Schwefelsäure oder Salpetersäure, oder in quaternierter Form eingesetzt (geeignete Quaternierungsmittel sind beispielsweise Dimethylsulfat, Diethylsulfat, Methylchlorid, Ethylchlorid oder Benzylchlorid).

Weiterhin kommen als Monomere der Gruppe (b) Amide von monoethylenisch ungesättigten $C_3$- bis $C_8$-Carbonsäuren mit Amidgruppen der Struktur in Betracht.

Die bevorzugten Monomeren der Gruppe (b) sind Acrylsäure, Methacrylsäure, Maleinsäure, Hydroxyethylacrylat, Hydroxypropylacrylate, Vinylacetat, N-Vinylpyrrolidon, Acrylamidomethylpropansulfonsäure und N-Vinylimidazol.

Eine weitere Modifizierung der Pfropfcopolymerisate kann dadurch erreicht werden, daß man die Pfropfpolymerisation in Gegenwart von Monomeren der Gruppe (c) durchführt. Die Monomermischungen enthalten in diesem Fall bis zu 5 Gew.-% eines mindestens zwei ethylenisch ungesättigten nicht konjugierte Doppelbindungen im Molekül aufweisenden Monomeres. Diese Verbindungen werden üblicherweise bei Copolymerisationen als Vernetzer verwendet. Sie können den zur Copolymerisation eingesetzten Monomeren der Gruppe (a) oder den Monomermischungen aus (a) und (b) zugesetzt werden. Im Falle ihres Einsatzes beträgt die bevorzugt verwendete Menge an Monomeren (c) 0,05 bis 2 Gew.-%. Die Mitverwendung der Monomeren der Gruppe (c) während der Copolymerisation bewirkt eine Erhöhung der Molmasse der Copolymerisate. Geeignete Verbindungen dieser Art sind beispielsweise Methylenbisacrylamid, Ester von Acrylsäure und Methacrylsäure mit mehrwertigen Alkoholen, z. B. Glykoldiacrylat, Glycerintriacrylat, Glykoldimethacrylat, Glycerintrimethacrylat, sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Diacrylate von Polyethylenglykolen eines Molekulargewichts bis zu 3000.

Die Polymerisation der Monomeren (a) sowie gegebenenfalls noch zusätzlich (b) und (c) erfolgt in Gegenwart von Naturstoffen auf Basis von Polysacchariden, Oligosacchariden, Monosacchariden und deren Derivaten. Die Naturstoffe sind z. B. Saccharide pflanzlichen oder tierischen Ursprungs oder Produkte des Stoffwechsels von Mikroorganismen sowie deren Abbau- und Modifizierungsprodukte, die bereits in Wasser oder Alkali dispergierbar oder löslich sind oder während der Polymerisation der Monomeren (a) und gegebenenfalls (b) und (c) direkt oder teilweise oder völlig in mit Alkali, Ammoniak oder Aminen neutralisierter Form dispergierbar oder löslich werden.

Es sind dies beispielsweise Stärke, Pektin, Algin, Chitin, Chitosan, Heparin, Carrageenan, Agar, Gummiarabicum, Traganth, Karaya-Gummi, Ghatti-Gummi, Johannisbrotkernmehl, Guar-Gummi, Tara-Gummi, Inulin, Xanthan, Dextran, Saccharose, Nigeran und Pentosane wie Xylan und Araban, deren Hauptbestandteile aus D-Glukuronsäure, D-Galakturonsäure, D-Galakturonsäuremethylester, D-Mannuronsäure, L-Guluronsäure, D- und L-Galaktose, 3,6-Anhydro-D-Galaktose, L-Arabinose, L-Rhamnose, D-Glucoronsäure, D-Xylose, L-Fucose, D-Mannose, D-Fructose und D-Glucose, 2-Amino-2-desoxi-D-glukose und 2-Amino-2-desoxi-D-galaktose sowie deren N-Acetylderivate, bestehen.

Vom wirtschaftlichen Standpunkt aus gesehen verwendet man als Polysaccharide der Komponente (B) bei der Pfropfcopolymerisation vorzugsweise Stärke, -thermisch und/oder mechanisch behandelte Stärke, oxidativ, hydrolytisch oder oxidierte enzymatisch abgebaute Stärken, oxidierte hydrolytisch oder oxidierte enzymatisch abgebaute Stärken sowie chemisch modifizierte Stärken und chemisch modifizierte Monosaccharide und Oligosaccharide.

Prinzipiell sind alle Stärken geeignet. Bevorzugt werden jedoch Stärken aus Mai, Weizen, Reis, Tapioka und insbesondere Stärke aus Kartoffeln. Die Stärken sind praktisch nicht in Wasser löslich und können in bekannter Weise durch thermische und/oder mechanische Behandlung oder durch einen enzymatisch oder einen säurekatalysierten Abbau in eine wasserlösliche Form überführt werden. Als Komponente (B) eignen sich auch oxidativ abgebaute Stärken. Als Stärkeabbauprodukt, die entweder durch oxidativen, hydrolytischen oder enzymatischen Abbau von Stärke erhältlich sind, seien beispielsweise folgende Verbindungen genannt: Dextrine wie Weiß- und Gelbdextrine, Maltodextrine, Glucosesirupe, Maltosesirupe, Hydrolysate von hohem Gehalt an D-Glucose, Stärkeverzuckerungsprodukte sowie Maltose und D-Glucose und deren Isomerisierungsprodukt Fruktose. Als Komponente (B) eignen sich selbstverständlich auch Mono- und Oligosaccharide, wie Galaktose, Mannose, Ribose, Saccharose, Raffinose, Lactose und Trehalose sowie Abbauprodukte der Cellulose, beispielsweise Cellubiose und ihre Oligomeren.

Als Komponente (B) kommen ebenso oxidierte Stärken, wie z. B. Dialdehydstärke und oxidierte Stärkeabbauprodukte in Betracht, wie beispielsweise Gluconsäure und Glucuronsäure. Solche Verbindungen werden beispielsweise durch Oxidation von Stärke mit Perjodat, Chromsäure, Wasserstoffperoxid, Stickstoffdioxid, Stickstofftetroxid, Salpetersäure oder Hypochlorit erhalten.

Als Komponente (B) eignen sich außerdem chemisch modifizierte Polysaccharide, insbesondere chemisch modifizierte Stärken, z. B. mit Säuren zu Estern und mit Alkoholen oder Alkylhalogeniden wie z. B. Chloressigsäure zu Ethern umgesetzte Stärken und Stärkeabbauprodukte. Die Veresterung dieser Stoffe ist sowohl mit anorganischen als auch mit organischen Säuren deren Anhydriden oder Chloriden möglich. Von besonderem technischem Interesse sind phosphatierte und acetylierte Stärken, Carboxymethylstärke und Stärkeabbauprodukte. Die gängigste Methode zur Veretherung von Stärke ist die Behandlung der Stärke und der Stärkeabbauprodukte mit organischen Halogenverbindungen, Epoxiden oder Sulfaten in wäßriger alkalischer Lösung. Stärkeether sind beispielsweise die Alkylether, Hydroxyalkylether, Carboxylalkylether und Allylether von Stärke. Unter chemisch modifizierten Stärken gemäß Komponente (B) sollen auch kationisch modifizierte Stärken verstanden werden, z. B. 2,3-Epoxipropyltrimethylammoniumchlorid umgesetzte Stärken wie sie z. B. in der US-PS 3,649,616 beschrieben sind.

Zu chemisch modifizierten Polysacchariden gehören beispielsweise auch Carboxymethylcellulose, Hydroxyethylcellulose, Hydroxypropylcellulose, Carboxymethylhydroxyethylcellulose, Sulfoethylcellulose, Carboxymethylsulfoethylcellulose, Hydroxypropylsulfoethylcellulose, Hydroxyethylsulfoethylcellulose, Methlylsulfoethylcellulose und Ethylsulfoethylcellulose.

Als Komponente (B) eignen sich auch chemisch modifizierte abgebaute Stärken, beispielsweise Hydrierungsprodukte von Stärkehydrolysaten, wie Sorbit und Mannit, Maltit und hydrierte Glukosesirupe oder oxidierte hydrolytisch abgebaute oder oxidierte enzymatisch abgebaute Stärken.

Als Komponente C) kommen alle dem Fachmann geläufigen Oxidationsmittel in Frage. Hierzu gehören u. a. Wasserstoffperoxid, Hypochlorid, Stickstoffdioxid, Stickstofftetroxid, Salpetersäure, Chromsäure und/oder Periodat. Bevorzugt wird Wasserstoffperoxid als Oxidationsmittel eingesetzt. Auch Mischungen mehrerer Oxidationsmittel sind möglich.

Die erfindungsgemäßen Pfropfcopolymerisate setzen sich vorzugsweise aus 20 bis 95 Gew.-% der Monomermischung (A) und 5 bis 80 Gew.-% der Komponente (B) zusammen. Dabei werden Produkte mit 25 bis 70 Gew.-% der Monomermischung (A) und 30 bis 75 Gew.-% der Komponente (B) besonders bevorzugt.

Liegt der Gehalt der Monomermischung unter 20 Gew.-%, so sind die Wascheigenschaften ungenügend, liegt der Gehalt der Monomermischung hingegen über 95 Gew.-%, so ist die biologische Abbaubarkeit ungenügend.

Ein weiterer Gegenstand der Erfindung ist ein Verfahren zur Herstellung von Pfropfcopolymerisaten von Monosacchariden, Polysacchariden und deren Derivaten durch radikalisch initiierte Copolymerisation von A) 95 bis 20 Gew.-% ethylenisch ungesättigten Monomeren in Gegenwart von B) 5 bis 80 Gew.-% mindestens eines Monosaccharids, Oligosaccharids, Polysaccharids, abgebauten oder chemisch modifizierten Mono-, Oligo- und Polysaccharids oder deren Mischungen und C) einem oder mehreren Oxidationsmitteln in einem inerten Verdünnungsmittel bei Temperaturen bis zu 180 °C, wobei als ethylenisch ungesättigte Monomere A) Mischungen aus

a) 40 - 100 Gew.-% mindestens eines α-β-ungesättigten Aldehyds der allgemeinen Formel I

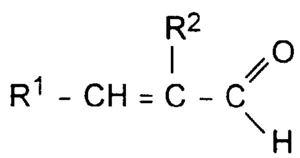

(I),

worin $R^1$ Wasserstoff oder $C_1$-$C_4$-Alkyl, linear oder verzweigt, und $R^2$ Wasserstoff oder Methyl bedeutet,

b) 0 - 60 Gew.-% von a) verschiedenen monoethylenisch ungesättigten Monomeren, die mit a) copolymerisierbar sind, und

c) 0 - 5 Gew.-% mindestens zwei ethylenisch ungesättigte, nicht konjugierte Doppelbindungen im Molekül aufweisenden Monomeren

eingesetzt werden und das eine oder mehrere Oxidationsmittel C) im Gewichtsverhältnis von C) zu A) + B) von (5 : 100) bis (50 : 50). Liegt das Oxidationsmittel in einem Gewichtsverhältnis von C) zu A) + B) kleiner (5 : 100) vor, so werden nicht genügend Carboxylgruppen im Molekül erzeugt, um ausreichende Wascheigenschaften zu erzielen, ist das Gewichtsverhältnis von C) zu A) + B) jedoch höher als (50 : 50), so ist aufgrund des oxidativen Abbaus das Molgewicht des Pfropfcopolymeren zu gering und es werden keine vorteilhaften Wascheigenschaften erhalten.

Durch die Polymerisation von α,β-ungesättigten Aldehyden unter oxidierenden Bedingungen werden Polymere erhalten, die als Strukturelemente noch freie Aldehydgruppen, bzw. deren Acetal, Säuregruppen, mit 3-Hydroxypropionsäure veresterte Säuregruppen, Alkoholgruppen sowie auch Ethergruppen enthalten können. Die genaue Strukturbestimmung der Polymeren ist jedoch schwierig. Bei der Herstellung der erfindungsgemäßen Polymerisate kommt es ferner zu einer Oxidation der eingesetzten Mono- bzw. Polysacchariden, wobei in diese Carboxylgruppen eingeführt werden, die vermutlich ebenfalls zu beobachteten Waschwirkung beitragen, und Radikale auf den Saccharidmolekülen erzeugt werden, an die α,β-ungesättigte Aldehyde und andere Monomere anpolymerisieren können. Eine Verknüpfung der Komponente (B) mit den aus (A) sich bildenden Polymeren kann ferner über die Aldehydgruppen der Komponente (A) unter Halbacetal- bzw. Acetalbildung erfolgen.

Wie oben erwähnt, handelt es sich beim Vorgesagten lediglich um einen Erklärungsversuch, von dessen Richtigkeit die in den Ansprüchen angegebene technische Lehre jedoch unabhängig ist.

Als Initiator für die Polymersation eignen sich Wasserstoffperoxid, Perschwefelsäure und deren Natrium, Kalium sowie Ammoniumsalz sowie Perkohlensäure, Perbor- und Perphosphorsäure, Peroxocarbonsäuren sowie deren Salze. Bevorzugt wird Wasserstoffperoxid als Initiator eingesetzt.

Da Wasserstoffperoxid auch ein bevorzugtes Oxidationsmittel ist, wird in einer vorteilhaften Ausführungsform der Erfindung Wasserstoffperoxid besonders bevorzugt sowohl als Initiator als auch als Oxidationsmittel eingesetzt.

Die Herstellung des erfindungsgemäßen Polymerisates erfolgt bevorzugt in wäßriger Lösung, wobei die Komponenten (A), (B) sowie das Oxidationsmittel in das Reaktionsgefäß vorgelegt oder während der Reaktion zudosiert werden können. Bevorzugt wird es die Komponente (B) vorzulegen und (A) zuzudosieren. Das Oxidationsmittel (C) kann wahlweise vorgelegt oder während der Reaktion zudosiert werden. Auch kann das Mono- oder Polysaccharid B) zunächst mit dem Oxidationsmittel C) voroxidiert und partiell abgebaut werden, bevor mit der Dosierung der Monomermischung A) begonnen wird. Der geeignete Reaktionstemperaturbereich liegt zwischen 50 und 100 °C, bevorzugt werden Temperaturen zwischen 65 und 85 °C. Die Dosierung der Komponenten erfolgt typischerweise über einen Zeitraum von 1 bis 6 Stunden. Anschließend wird noch 1 bis 6 Stunden bei Temperaturen zwischen 70 und 100 °C nachgeheizt, um einen vollständigen Reaktionsablauf sicherzustellen.

Das erhaltene Produkt kann ohne weitere Behandlung verwendet werden oder es kann vor der Verwendung aufkonzentriert, oder mit den dem Fachmann bekannten Verfahren wie z. B. durch Sprühtrocknung getrocknet werden. Es kann insbesondere auch vor der Aufarbeitung mit anderen Wasch- und Reinigungsmittelkomponenten abgemischt werden.

Bei den erfindungsgemäßen Pfropfcopolymerisaten handelt es sich um Polycarboxylate, die den Vorteil aufweisen, daß sie neben einem guten Kalkbindevermögen eine hervorragende biologische Abbaubarkeit sowie eine hervorragende Inhibierung der Inkrustation aufweisen.

Die erfindungsgemäßen Polycarboxylate können sowohl als Cobuilder als auch als Builder in Waschmitteln eingesetzt werden. Bei dem Einsatz als Cobuilder können sie neben bekannten Buildern, wie zum Beispiel Zeolith A, Schichtsilikaten, wie SKS-6 oder amorphen Disilikaten, verwendet werden.

Dabei können sie in Kombination mit wasserlöslichen oder wasserunlöslichen, anorganische und/oder organische Buildermaterialien eingesetzt werden. Geeignete anorganische Buildersubstanzen sind beispielsweise Zeolithe, Phosphate und Natriumsilikate.

Der eingesetzte Zeolith ist vorzugsweise feinteiliger Zeolith NaA. Geeignet sind jedoch auch Zeolith NaX und Zeolith NaP sowie Mischungen dieser drei Zeolithe. Derartige Zeolithe weisen insbesondere eine mittlere Teilchengröße von weniger als 10 µm auf und enthalten vorzugsweise 18 bis 22 Gew.-% Wasser (bestimmt als Glühverlust 1 h bei 1000 °C). Die Zeolithe können aber ebenso als stabilisierte Suspension eingesetzt werden. Hierbei bewirken geringe Mengen an zugesetzten nichtionischen Tensiden eine Stabilisierung der Suspension.

Als Ersatz oder Teilersatz für Phosphate und Zeolithe können amorphe oder kristalline Alkalisilikate vorliegen. Bevorzugte Alkalisilikate sind die Natriumsilikate, insbesondere die amorphen Natriumsilikate, mit einem molaren Verhältnis $Na_2O$ : $SiO_2$ von 1,5 zu 3. Derartige amorphe Alkalisilikate sind beispielsweise unter dem Namen Portil® (Henkel) erhältlich. Auch Cogranulate aus Soda und amorphen Natriumdisilikaten, die zum Beispiel unter der Bezeichnung Nabion 15® (Rhone-Poulenc) bekannt sind, können eingesetzt werden. Als kristalline Silikate, die allein oder im Gemisch mit amorphen Silikaten vorliegen können, werden bevorzugt kristalline schichtförmige Natriumsilikate der allgemeinen Form $NaMSi_xO_{2x+1} \cdot yH_2O$, wobei M Natrium oder Wasserstoff bedeutet, x eine Zahl von 1,9 bis 4 und y eine Zahl von 0 bis 20 ist und ein bevorzugter Wert für x = 2 ist. In dem europäischen Patent EP 0 164 514 sind derartige kristalline Schichtsilikate beschrieben. Insbesondere sind sowohl β- als auch δ-Natriumdisilikate bevorzugt.

Brauchbare organische Gerüstsubstanzen sind beispielsweise die bevorzugt in Form ihrer Natriumsalze eingesetzten Polycarbonsäuren, wie z. B. Polyacrylsäure, Polymethacrylsäure und deren Copolymere mit Maleinsäure sowie Weinsäure, Zitronensäure, Bernsteinsäure, Adipinsäure, Glutarsäure, Zuckersäuren, Aminocarbonsäuren, Nitrilotriessigsäure sowie Mischungen aus diesen.

Bei einer Kombination der erfindungsgemäßen Verbindung mit den vorgenannten anorganischen und/oder organischen Buildern spielt es keine Rolle, ob die Verbindung in Form von sprühgetrockneten oder auf sonstige Art und Weise vorgemischten Compounds mit den genannten Buildern oder direkt in die Waschmittelzubereitung eingebracht werden.

Ein weiterer Gegenstand der Erfindung sind Verfahren zum Waschen und Reinigen von textilen Geweben, bei denen man das erfindungsgemäße Pfropfcopolymerisate als Builder einsetzt.

Ein weiterer Gegenstand der Erfindung sind Wasch- und Reinigungsmittel, die die erfindungsgemäßen Pfropfcopolymerisate enthalten.

Nachfolgend wird die Erfindung anhand von Beispielen eingehender erläutert.

**I. Methoden:**

**A) Bestimmung des Molekulargewichtes**

Die Molekulargewichtsbestimmung erfolgt über Gelpermeationschromatographie (GPC) an LiChrospher Diol Säulen (Fa. Merck) und mit Phosphatpuffer (pH = 7) als Eluentlösung. Eine Kalibrierung kann am besten mit engverteilter Polyacrylsäure erfolgen. Dabei bewirkt die nicht konstante chemische Zusammensetzung der erfindungsgemäßen Copolymere einen Fehler in dem Absolutwert des Molekulargewichtes. Diese allgemein bekannte Fehlerquelle kann nicht ohne weiteres beseitigt werden, so daß alle hier gemachten Angaben über das Molekulargewicht als relativ zu der Kalibrierung mit Polyacrylsäure zu verstehen sind.

**B) Bestimmung des Kalkbindevermögens**

Das Kalkbindevermögen (KBV) ist eine Maßzahl, die angibt, wieviel Milligramm Calciumcarbonat ($CaCO_3$) pro Gramm Komplexbildner bis zu einem bestimmten Grad in Lösung gehalten bzw. dispergiert werden. Sie wird durch eine Trübungstitration bestimmt.

200 mg des Polymeren (berechnet als Feststoff) werden in 100 ml voll entsalztem Wasser gelöst. Der pH-Wert dieser Lösung soll > 6 sein und muß evtl. mit Natronlauge entsprechend korrigiert werden. Danach werden 10 ml 2 %ige Sodalösung hinzugegeben, und der pH-Wert wird mit Natronlauge oder Essigsäure auf 10 eingestellt. Diese Lösung wird mit Calciumacetat (44,1 g/l) titriert, und die durch ausfallendes Calciumcarbonat auftretende Trübung wird mit einer Lichtleitermeßzelle (Wellenlänge = 650 nm) gemessen und registriert. Vor der Titration ist die Transmission der Meßzelle auf 100 % einzustellen. Der KBV-Wert wird bei 50 % Transmission bestimmt.

**C) Bestimmung der biologischen Abbaubarkeit nach Zahn-Wellens**

Der Abbautest nach Zahn und Wellens ist ein Hilfsmittel, die biologische Abbaubarkeit einer Substanz bzw. eines Abwassers zu beurteilen. Er arbeitet in einem festgelegten Verhältnis des CSB zur Biomasse.

In einem hohen 3 1-Becherglas werden ca. 2 1 Biomassesuspension gerührt und über Glasfritten belüftet. Es werden 385 mg $NH_4Cl$ und 89 mg $NaH_2PO_4 \cdot H_2O$ eingewogen, mit der berechneten Polymermenge versetzt und mit kaltem Leitungswasser auf ca. 2 1 aufgefüllt. Der Belebtschlamm aus einer kommunalen Kläranlage wird 30 - 60 min absetzen lassen, so daß er ca. um die Hälfte eindickt. Das überstehende Wasser wird abdekantiert und der Schlamm unter Rühren und Belüften aufbewahrt. Jeweils ein Teil des Schlammes wird davon abgenommen und bei 2000 Upm 5 min zentrifugiert. 24 g des zentrifugierten Schlammes auf einen 2 1-Ansatz ergeben einen Trockensubstanzgehalt von 1 g/l (± 20 %). Vor der Zugabe des Schlammes zur Polymerlösung wird der pH auf 6,5 - 7,0 eingestellt und eine Probe auf den CSB-Gehalt hin analysiert. Nachdem sich der Belebtschlamm fein verteilt hat, kann erneut eine Probe entnommen werden. Die Höhe der Flüssigkeit im Becherglas wird dann markiert. Zum Vergleich wird ein Test angesetzt, der nur Nährsalze und Belebtschlamm, jedoch kein Polymer enthält. Dieser Ansatz dient zur Ermittlung des durch den Belebtschlamm verursachten CSB. Mit einem Gummiwischer wird der am Rand des Becherglases abgesetzte Bioschlamm täglich zurück in die Lösung gewischt, der pH-Wert erneut eingestellt und verdunstetes Wasser durch entmineralisiertes Wasser ersetzt. Zur Bestimmung der am Bioschlamm adsorbierten Substanz werden zwei Proben auf ihren CSB-Gehalt analysiert, eine filtrierte Probe und eine unfiltrierte. Die unfiltrierte Probe wird direkt aus dem gut durchmischten Reaktionsgefäß entnommen und gemessen. Für die zu filtrierende Probe wird ein aliquoter Teil, zum Beispiel 40 ml, entnommen, absetzen lassen und über ein Millipore 2,5 µ Filter (zum Beispiel Millipore Millex GS) filtriert. Die klare Lösung wird ebenfalls auf ihren CSB-Gehalt analysiert.

Berechnung

Um CSB-Gehalt der Substanz zu ermitteln, der an der Biomasse adsorbiert ist, wird vom CSB in der Probelösung mit Biomasse der CSB-Wert der filtrierten Probe und der Blindwert mit Biomasse abgezogen.

P1 unfiltrierte Probelösung mit Schlamm
P2 filtrierte Probelösung
Bls unfiltrierter Blindwert
ad absorbierte Substanz

$$P1 - P2 - Bls = ad$$

Wird von der filtrierten Probe P2 der filtrierte Blindwert abgezogen, so erhält man die gelöste Substanz.

B1 filtrierter Blindwert
S gelöste Substanz

P2 - B1 = S

Adsorbierte und gelöste Substanz zusammen ergeben den Anfangsgehalt an abzubauendem Stoff bzw. den Gehalt zur Zeit. Der Abbaugrad η berechnet sich

A Anfangswert
η Abbaugrad

$$\eta = \frac{A-(ad+s)}{A} .100$$

## II. Beispiele

### Beispiel 1

In einem mit Kühler, Rührer und Temperier- sowie Dosiereinrichtung versehenen Reaktor werden 1260 g entionisiertes Wasser, 105 g 50 %iges Wasserstoffperoxid und 240 g Aeromyl 115 (kaltwasserlösliche Stärke der Firma Südstärke) vorgelegt und auf 70 °C aufgeheizt. Unter Rühren wird über einen Zeitraum von 3,5 Stunden eine Mischung aus 189 g Acrolein und 21,6 g Acrylsäure zudosiert. Parallel hierzu werden weitere 105 g 50 %iges Wasserstoffperoxid zudosiert. Anschließend wird über einen Zeitraum von 1 Stunde auf 90 °C aufgeheizt und der Reaktionsansatz wird weitere 4 Stunden bei dieser Temperatur gehalten. Nach Abkühlen auf RT wird ein pH von 1,5 gemessen. Der Reaktionsansatz wird mit 50 %iger NaOH auf pH 10 eingestellt und auf einen Feststoffgehalt von 40 % aufkonzentriert.
KBV(23 °C) = 820 mg $CaCO_3$/g, KBV(60 °C) = 150 mg $CaCO_3$/g, Molgewicht (GPC) = 27900 g/mol

### Beispiel 2

In einem mit Kühler, Rührer und Temperier- sowie Dosiereinrichtung versehenen Reaktor werden 630 g entionisiertes Wasser, 51 g 50 %iges Wasserstoffperoxid und 79,4 g Aeromyl 115 (kaltwasserlösliche Stärke der Firma Südstärke) vorgelegt und auf 70 °C aufgeheizt. Unter Rühren wird über einen Zeitraum von 3 Stunden eine Mischung aus 91,7 g Acrolein und 13,1 g Acrylsäure zudosiert. Parallel hierzu werden weitere 51 g 50 %iges Wasserstoffperoxid zudosiert. Anschließend wird auf 95 °C aufgeheizt und der Reaktionsansatz wird 4 Stunden bei dieser Temperatur gehalten.
KBV(23 °C) = 1200 mg $CaCO_3$/g, KBV(60 °C) = 180 mg $CaCO_3$/g, Molgewicht (GPC) = 8050 g/mol, Abbaugrad η nach 28 d = 63 %

### Beispiel 3

In einem mit Kühler, Rührer und Temperier- sowie Dosiereinrichtung versehenen Reaktor werden 630 g entionisiertes Wasser, 44,9 g 50 %iges Wasserstoffperoxid und 79,4 g Aeromyl 115 (kaltwasserlösliche Stärke der Firma Südstärke) vorgelegt und auf 70 °C aufgeheizt. Unter Rühren wird über einen Zeitraum von 3 Stunden eine Mischung aus 80,2 g Acrolein und 25,5 g Acrylsäure zudosiert. Parallel hierzu werden weitere 44,9 g 50 %iges Wasserstoffperoxid zudosiert. Anschließend wird auf 95 °C aufgeheizt und der Reaktionsansatz wird 4 Stunden bei dieser Temperatur gehalten.
KBV(23 °C) = 1280 mg $CaCO_3$/g, KBV(60 °C) = 200 mg $CaCO_3$/g, Molgewicht (GPC) = 10450 g/mol, Abbaugrad η nach 28 d = 52 %

### Beispiel 4

In einem mit Kühler, Rührer und Temperier- sowie Dosiereinrichtung versehenen Reaktor werden 630 g entionisiertes Wasser, 30,3 g 50 %iges Wasserstoffperoxid und 79,4 g Aeromyl 115 (kaltwasserlösliche Stärke der Firma Südstärke) vorgelegt und auf 70 °C aufgeheizt. Unter Rühren wird über einen Zeitraum von 3 Stunden eine Mischung aus 54,1. g Acrolein, 2870 g Vinylacetat und 23,2 g Acrylsäure zudosiert. Parallel hierzu werden weitere 30,3 g 50 %iges Wasserstoffperoxid zudosiert. Anschließend wird auf 95 °C aufgeheizt und der Reaktionsansatz wird 4 Stunden bei dieser Temperatur gehalten.
KBV(23 °C) = 1350 mg $CaCO_3$/g, KBV(60 °C) = 140 mg $CaCO_3$/g, Molgewicht (GPC) = 7835 g/mol, Abbaugrad η nach 28 d = 62 %

**Beispiel 5**

In einem mit Kühler, Rührer und Temperier- sowie Dosiereinrichtung versehenen Reaktor werden 1200 g entionisiertes Wasser, 150 g 50 %iges Wasserstoffperoxid und 234 g Kartoffelmehl vorgelegt und auf 70 °C aufgeheizt. Der Reaktionsansatz wird 2 h bei dieser Temperatur gehalten. Unter Rühren wird anschließend über einen Zeitraum von 3,5 Stunden eine Mischung aus 180 g Acrolein und 20,0 g Acrylsäure zudosiert. Parallel hierzu werden weitere 50 g 50 %iges Wasserstoffperoxid zudosiert. Anschließend wird auf 95 °C aufgeheizt und der Reaktionsansatz wird 4 Stunden bei dieser Temperatur gehalten.
(GPC) = 17300 g/mol

**Beispiel 6**

In einem mit Kühler, Rührer und Temperier- sowie Dosiereinrichtung versehenen Reaktor werden 865 g entionisiertes Wasser, 150 g 50 %iges Wasserstoffperoxid und 200 g Weißdextrin vorgelegt und auf 70 °C aufgeheizt. Unter Rühren wird über einen Zeitraum von 3,5 Stunden eine Mischung aus 180 g Acrolein und 20 g Acrylsäure zudosiert. Parallel hierzu werden weitere 50 g 50 %iges Wasserstoffperoxid zudosiert. Anschließend wird auf 95 °C aufgeheizt und der Reaktionsansatz wird 4 Stunden bei dieser Temperatur gehalten.
KBV(23 °C) = 1360 mg $CaCO_3$/g, KBV(60 °C) = 825 mg $CaCO_3$/g

**Beispiel 7**

In einem mit Kühler, Rührer und Temperier- sowie Dosiereinrichtung versehenen Reaktor werden 268,5 g entionisiertes Wasser, 238,8 g 50 %iges Wasserstoffperoxid und 108,0 g Weißdextrin vorgelegt und auf 70 °C aufgeheizt. Unter Rühren wird über einen Zeitraum von 3,5 h eine Mischung aus 262,8 g Acrolein und 29,2 g Acrylsäure zudosiert. Parallel hierzu werden weitere 79,6 g 50 %iges Wasserstoffperoxid zudosiert. Anschließend wird der Reaktionsansatz innerhalb 1 h auf 90 °C erhitzt und für 4 h bei dieser Temperatur gehalten.
Nach dem Abkühlen wird durch Zugabe von 50 %iger Natronlauge auf einen pH-Wert von 8,6 eingestellt. Man erhält eine klare, gelbliche Lösung mit einem Feststoffgehalt von 43 %.
KBV (23 °C) = 1600 mg $CaCO_3$/g, KBV (60 °C) = 300 mg $CaCO_3$/g,
Fließpunkt = -19 °C,
Abbaugrad $\eta$ nach 28 d = 45 %.

**Beispiel 8**

In einem mit Kühler, Rührer und Temperier- sowie Dosiereinrichtung versehenen Reaktor werden 320,5 g entionisiertes Wasser, 196,6 g 50 %iges Wasserstoffperoxid und 177,4 g Weißdextrin vorgelegt und auf 70 °C aufgeheizt. Unter Rühren wird über einen Zeitraum von 3,5 h eine Mischung aus 216 g Acrolein und 24 g Acrylsäure zudosiert. Parallel hierzu werden weitere 65,5 g 50 %iges Wasserstoffperoxid zudosiert. Anschließend wird der Reaktionsansatz auf 90 °C erhitzt und für 3 h bei dieser Temperatur gehalten. Nach dem Abkühlen wird durch Zugabe von 50 %iger Natronlauge auf einen pH-Wert von 8,6 eingestellt. Man erhält eine klare, gelbe Lösung mit einem Feststoffgehalt von 45 %.
KBV (23 °C) = 1220 mg $CaCO_3$/g, KBV (60 °C) = 160 mg $CaCO_3$/g,
Fließpunkt = -16 °C,
Abbaugrad $\eta$ nach 28 d = 45 %.

**Vergleichsbeispiel 1**

In einem mit Kühler, Rührer und Temperier- sowie Dosiereinrichtung versehenen Reaktor werden 420 Gewichtsteile entionisiertes Wasser und 307 Teile Wasserstoffperoxid 50 %ig vorgelegt und auf 70 °C erwärmt. Unter Rühren werden über einen Zeitraum von 4 Stunden 1012 Teile Acrolein und 338 Teile Vinylacetat sowie 922 Teile Wasserstoffperoxid (50 %ig) gleichmäßig zudosiert. Nach beendeter Zugabe werden nochmals 120 g Wasserstoffperoxid (50 %ig) zugegeben und die Temperatur wird innerhalb von 1 h auf 90 °C erhöht und bei dieser Temperatur gehalten, bis das überschüssige Wasserstoffperoxid zerstört ist. Nach dem Abkühlen auf Raumtemperatur hat die Polymerlösung einen pH-Wert von 1,4. Der pH wird mit 50 %iger NaOH-Lösung auf pH 10 eingestellt.
KBV(23 °C) = 1060 mg $CaCO_3$/g, KBV(60 °C) = 80 mg $CaCO_3$/g,
Molgewicht (GPC) = 2790 g/mol, Abbaugrad $\eta$ nach 28 d = 37 %

**Vergleichsbeispiel 2 (EP-A-0 441 197)**

In einem beheizbaren Reaktor, der mit Rührer, Rückflußkühler, Thermometer, Zulaufvorrichtungen, Stickstoffeinlaß- und -auslaßvorrichtungen versehen ist, werden 253,4 g Wasser, 89,7 g Weißdextrin (89,2 % Feststoffgehalt), 63,8 g Maleinsäureanhydrid und 3,5 g einer 0,1 %igen wäßrigen Eisen-II-Ammoniumsulfatlösung und 94 g 50 %iger wäßriger Natronlauge bis zum Sieden erhitzt. Nach Beginn des Siedens der Reaktionsmischung gibt man innerhalb von 5 h eine Lösung aus 178,2 g Acrylsäure in 141,9 g Wasser und innerhalb von 6 h eine Lösung von 16,6 g 50 %igem Wasserstoffperoxid in 44,4 g Wasser gleichmäßig unter Sieden zu. Das Reaktionsgemisch wird nach Abschluß der Wasserstoffperoxiddosierung noch 1 h zum Sieden erhitzt, danach durch Zugabe von 50 %iger wäßriger Natronlauge bis zu einem pH-Wert von 7,3 neutralisiert und abgekühlt. Man erhält eine klare, viskose dunkelbraune Lösung mit einem Feststoffgehalt von 42,8 %.
KBV (23 °C) =1010 mg $CaCO_3$/g, KBV (60 °C) = 950 mg $CaCO_3$/g,
Fließpunkt = -6 °C,
Abbaugrad η nach 28 d = 16 %.

**Vergleichsbeispiel 3 (EP-A-0 441 197)**

In dem in Vergleichsbeispiel 2 beschriebenen Reaktor werden 248,6 g Wasser, 134,5 g Weißdextrin (89,2 % Feststoffgehalt), 55,9 g Maleinsäureanhydrid, 3,5 g 0,1 %ige wäßrige Lösung von Eisen-II-Ammoniumsulfat und 82,2 g 50 %ige wäßrige Natronlauge vorgelegt und zum Sieden erhitzt. Unmittelbar nach dem Beginn des Siedens gibt man innerhalb von 5 h eine Lösung von 155,9 g Acrylsäure in 141,9 g Wasser und getrennt davon innerhalb von 6 h eine Lösung von 14,5 g 50 %igem Wasserstoffperoxid in 44,9 g Wasser gleichmäßig zu und erhitzt das Reaktionsgemisch unter Rühren zum Sieden. Nach Beendigung der Wasserstoffperoxidzugabe wird das Reaktionsgemisch noch 1 h zum Sieden erhitzt und danach durch Zugabe von 132,5 g 50 %iger Natronlauge bis zu einem pH-Wert von 7 neutralisiert. Man erhält eine trübe, hochviskose hellbraune Lösung mit einem Feststoffgehalt von 43,7 %.
KBV (23 °C) = 920 mg $CaCO_3$/g, KBV (60 °C) = 660 mg $CaCO_3$/g,
Fließpunkt = -5 °C,
Abbaugrad η nach 28 d = 26 %.

**Vergleichsbeispiel 4 (EP-A-0 441 197)**

In dem in Vergleichsbeispiel 2 beschriebenen Reaktor werden 254,7 g Wasser, 160 g Maltodextrin mit einem DE-Wert von ca. 3, 47,9 g Maleinsäureanhydrid, 3,5 g einer 0,1 %igen wäßrigen Lösung von Eisen-II-Ammoniumsulfat und 70,5 g einer 50 %igen Natronlauge vorgelegt und zum Sieden erhitzt. Unmittelbar nach Beginn des Siedens dosiert man innerhalb von 5 h eine Lösung von 133,6 g Acrylsäure in 141,9 g Wasser und innerhalb von 6 h eine Lösung von 12,45 g 50 %igem Wasserstoffperoxid in 44,4 g Wasser unter Aufrechterhalten des Siedens der Mischung gleichmäßig zu. Nach Abschluß der Wasserstoffperoxidzugabe wird das Reaktionsgemisch noch 1 h zum Sieden erhitzt. Man erhält ein trübes, braunes Gel.
KBV (23 °C) = 770 mg $CaCO_3$/g, KBV (60 °C) = 650 mg $CaCO_3$/g,
Abbaugrad η nach 28 d = 29 %.

**Vergleichsbeispiel 5**

In dem in Vergleichsbeispiel 2 beschriebenen Reaktor werden 253,4 g Wasser, 89,7 g Weißdextrin (89,2 % Feststoffgehalt) und 3,5 g einer 0,1 %igen wäßrigen Eisen-II-Ammoniumsulfatlösung bis zum Sieden erhitzt. Nach Beginn des Siedens der Reaktionsmischung gibt man innerhalb von 5 h eine Lösung aus 178,2 g Acrylsäure in 141,9 g Wasser und innerhalb von 6 h eine Lösung von 16,6 g 50 %igem Wasserstoffperoxid in 44,4 g Wasser gleichmäßig unter Sieden zu. Das Reaktionsgemisch wird nach Abschluß der Wasserstoffperoxiddosierung noch 1 h zum Sieden erhitzt, danach durch Zugabe von 50 %iger wäßriger Natronlauge bis zu einem pH-Wert von 7,2 neutralisiert und abgekühlt. Man erhält eine trübe, viskose braune Lösung mit einem Feststoffgehalt von 38,4 %.
KBV (23 °C) = 1230 mg $CaCO_3$/g, KBV (60 °C) = 500 mg $CaCO_3$/g,
Fließpunkt = -8 °C,
Abbaugrad η nach 28 d = 25 %.

**Konsistenz und Farbe:**

Die Produkte der Vergleichsversuche sind stark gefärbt und meist trübe. Es handelt sich um viskose Flüssigkeiten, in einem Fall sogar um ein Gel.

Die Produkte nach Anspruch zeigen überraschend günstigere Eigenschaften. Es handelt sich um klare Flüssigkeiten mit nur schwach gelber Einfärbung.

**Fließpunkt (pour point):**

Die Fließpunkte der Produkte wurden in Anlehnung[1] an ISO 3016-1974 gemessen. Der Fließpunkt bezeichnet die Temperatur, bei der die Substanz eben noch wahrnehmbar fließt, nachdem sie unter festgelegten Bedingungen abgekühlt wurde. Das Fließverhalten der Lösungen unter Kühlung ist bei den beanspruchten Verbindungen überraschend besser als das der Vergleichsprodukte. Sie sind dadurch auch unter ungünstigen äußeren Bedingungen (Kälte) noch gut handhabbar, d. h., sie können auch noch bei tiefen Temperaturen gepumpt und gefördert werden. Die Fließpunkte der Beispiele und der Vergleichsbeispiele sind in Tab. 1a gegenübergestellt.

Tab. 1a:

| Fließpunkte | |
|---|---|
| **Produkt** | **Fließpunkt [°C]** |
| Beispiel 7 | -19 |
| Beispiel 8 | -16 |
| Vergleichsbeispiel 2 | -6 |
| Vergleichsbeispiel 3 | -5 |
| Vergleichsbeispiel 4 | bereits bei RT ein Gel |
| Vergleichsbeispiel 5 | -8 |
| RT = Raumtemperatur | |

**Biologische Abbaubarkeit nach Zahn-Wellens:**

Die Produkte nach Anspruch werden wesentlich besser abgebaut als die der Vergleichsversuche. Der Abbaugrad der Beispiele und Vergleichsbeispiele ist in Tab. 2a gegenübergestellt.

Tab. 2a:

| Abbaugrad $\eta$ beim Zahn-Wellens-Test nach 28 d | |
|---|---|
| **Produkt** | **Abbaugrad $\eta$ nach 28 d [%]** |
| Beispiel 2 | 63 |
| Beispiel 3 | 52 |
| Beispiel 4 | 62 |
| Beispiel 7 | 45 |
| Beispiel 8 | 45 |
| Vergleichsbeispiel 1 | 37 |
| Vergleichsbeispiel 2 | 16 |
| Vergleichsbeispiel 3 | 26 |
| Vergleichsbeispiel 4 | 29 |
| Vergleichsbeispiel 5 | 25 |

**Waschversuch**

Um die erfindungsgemäßen Profpcopolymerisate hinsichtlich ihrer inkrustationsinhibierenden Wirkung zu charakterisieren wurde, wurden sie in Waschmittelzusammensetzungen eingearbeitet. Mit diesen Waschmittelformu-

[1] In Abweichung von der Norm wurde anstelle eines Reagenzglases mit einem flachen Boden eines mit einem runden Boden benutzt. Der Einfluß dieser Änderung auf die Meßergebnisse wird als vernachlässigbar eingeschätzt, zumal alle Versuche in demselben Gefäß durchgeführt wurden und somit in jedem Fall untereinander vergleichbar sind. Der Fehler der Messung innerhalb einer Meßreihe wird mit ± 3 °C angegeben.

lierungen wurden jeweils Testgewebe aus Frottee, Gerstenkornhandtuch, Baumwollgewebe weiß und Baumwollgewebe mit grünen Streifen gewaschen. Es wurden 25 Waschzyklen durchgeführt. Nach jeder Wäsche wurde das Gewebe trockengebügelt. Nach je 10 und 25 Waschzyklen wurden die Testgewebe verascht (Doppelbestimmung). Je 2 g Gewebe werden bin einem Vorverascher bei 500 °C 1 h lang geglüht, und anschließend 1 h in einem Muffelofen bei 800 °C verascht. Die Tiegel werden zurückgewogen und die Aschegehalte in Prozent bestimmt. Je wirksamer ein Polymerisat ist, umso geringer ist der Aschegehalt. Nach DIN 44 983 Teil 50 werden die LSD-Werte (kleinste signifikante Abweichung) berechnet. Die Rangfolge ergibt sich über eine Benotung der einzelnen an verschiedenen Geweben ermittelten Meßwerte.

| Waschmittel A | |
|---|---|
| 10,00 % | Marlon ARL |
| 1,00 % | Dehydrol TA5 |
| 6,00 % | Dehydrol LT7 |
| 1,00 % | Edenor HT35 |
| 0,15 % | Blankophor MBBH-766 |
| 0,02 % | Tinopal CBS-X |
| 0,23 % | Trilon B |
| 12,00 % | Soda |
| 2,70 % | Portil N |
| 1,10 % | Relatin DM 4050 |
| 2,50 % | Natriumperborattetrahydrat |
| 11,70 % | Natriumperboratmonohydrat |
| 30,30 % | Wessalith CS |
| 0,60 % | Entschäumer |
| 6,00 % | TAED |
| 5,40 % | Pfropfcopolymerisat gemäß Beispiel 1 (Feststoffgehalt) |
| 0,50 % | Lipolase |
| 0,70 % | Esperase 4.0 T |
| 0,36 % | Natriumsulfat |

| Waschmittel B | |
|---|---|
| 10,00 % | Marlon ARL |
| 1,00 % | Dehydrol TA5 |
| 6,00 % | Dehydrol LT7 |
| 1,00 % | Edenor HT35 |
| 0,15 % | Blankophor MBBH-766 |
| 0,02 % | Tinopal CBS-X |
| 0,23 % | Trilon B |
| 12,00 % | Soda |
| 2,70 % | Portil N |
| 1,10 % | Relatin DM 4050 |
| 2,50 % | Natriumperborattetrahydrat |
| 11,70 % | Natriumperboratmonohydrat |
| 30,30 % | Wessalith CS |
| 0,60 % | Entschäumer |
| 6,00 % | TAED |
| 5,40 % | Copolymerisat gemäß Vergleichsbeispiel 1 (Feststoffgehalt) |
| 0,50 % | Lipolase |
| 0,70 % | Esperase 4.0 T |
| 0,36 % | Natriumsulfat |

| Waschmittel C | |
|---|---|
| 10,00 % | Marlon ARL |
| 1,00 % | Dehydrol TA5 |
| 6,00 % | Dehydrol LT7 |
| 1,00 % | Edenor HT35 |
| 0,15 % | Blankophor MBBH-766 |
| 0,02 % | Tinopal CBS-X |
| 0,23 % | Trilon B |
| 12,00 % | Soda |
| 2,70 % | Portil N |
| 1,10 % | Relatin DM 4050 |
| 2,50 % | Natriumperborattetrahydrat |
| 11,70 % | Natriumperboratmonohydrat |
| 30,30 % | Wessalith CS |
| 0,60 % | Entschäumer |
| 6,00 % | TAED |
| 5,40 % | Sokalan CP5 (Feststoffgehalt; weitverbreitetes Marktprodukt) |
| 0,50 % | Lipolase |
| 0,70 % | Esperase 4.0 T |
| 0,36 % | Natriumsulfat |

| Waschbedingungen | |
|---|---|
| Sekundärwaschvermögen: | 1 Zyklus entsrechend 25 Wäschen |
| Temperatur / Härte: | 60° Celsius / 20° dH |
| Waschmaschinentyp: | Miele W 763 |
| Programm: | Koch-/Buntwäsche ohne Vorwäsche |
| Waschmittelmenge: | 80,0 g (6,15 g/l) |
| Ballaststoff:<br>(ca. 2,7 kg) | 18 St. Baumwolle weiß ca.<br>3 St. Frottee<br>3 St. Handtücher (zum Aufnähen der Anschmutzungen) |
| Weißgewebe:<br>(ca. 0,8 kg) | je 1 Stück Frottee<br>je 1 Stück Handtuch<br>je 2 Stücke Baumwolle weiß (BW / weiß)<br>je 2 Stücke Baumwolle gr. Sr. (BW / GS) |
| Anschmutzung: | Blut, (EMPA 111)<br>Standard, (EMPA 101)<br>Hautfett (WFK 10 G)<br>Tee, (WFK 10 G) |
| Aufhärtung: | zu jedem ungeraden Waschgang<br>Blut, (EMPA 111)<br>Standard, (EMPA 101)<br>Hautfett (WFK 10 G)<br>Tee, (WFK 10 G) |

Die Wäschereiforschung Krefeld (WFK) und die Eidgenössische Material Prüfanstalt (EMPA) Schweiz verkaufen Testanschmutzungen für Waschversuche. Diese Testanschmutzungen heißen z. B. EMPA 111 für Blutanschmutzungen etc.

Tabelle 1

| Inkrustationsinhibierende Wirkung des erfindungsgemäßen Polymeren gemäß Beispiel 1 | | |
|---|---|---|
| Anzahl der Wäschen | Gewebe | Waschmittel A Aschegehalt [%] |
| 10 | Frottee | 0,62 |
| 10 | Handtuch | 0,47 |
| 10 | BW / GS | 0,58 |
| 10 | BW / weiß | 0,68 |
| 10 | Mittelwert | 0,59 |
| 25 | Frottee | 1,40 |
| 25 | Handtuch | 1,13 |
| 25 | BW / GS | 1,15 |
| 25 | BW / weiß | 1,31 |
| 25 | Mittelwert | 1,25 |
| LSD-Werte: F: 0,06 %; HT: 0,08 %; BW/GS 0,04 %; BW / weiß: 0,18 % | | |

Tabelle 2

| Inkrustationsinhibierende Wirkung der Vergleichsbeispiele | | | |
|---|---|---|---|
| Anzahl der Wäschen | Gewebe | Waschmittel B Aschegehalt [%] | Waschmittel C Aschegehalt [%] |
| 10 | Frottee | 0,67 | 1,06 |
| 10 | Handtuch | 0,74 | 0,67 |
| 10 | BW / GS | 0,79 | 1,14 |
| 10 | BW / weiß | 0,97 | 0,72 |
| 10 | Mittelwert | 0,79 | 0,90 |
| 25 | Frottee | 1,61 | 1,58 |
| 25 | Handtuch | 1,47 | 1,60 |
| 25 | BW / GS | 1,74 | 1,88 |
| 25 | BW / weiß | 1,68 | 1,45 |
| 25 | Mittelwert | 1,63 | 1,63 |
| LSD-Werte: F: 0,06 %; HT: 0,08 %; BW/GS 0,04 %; BW / weiß: 0,18 % | | | |

Aus den in den Tabellen 1 und 2 gezeigten Testergebnisse ergibt sich folgende Reihenfolge für die Wirsamkeit der verschiedenen Polymerisate:
Nach 10 Wäschen:
erfindungsgemäßes Pfropfcopolymerisat wirksamer als Vergleichsbeispiel 1, welches wirksamer als das Marktprodukt Sokalan CP 5 ist
und nach 25 Waschen:
erfindungsgemäßes Pfropfcopolymerisat wirksamer als Vergleichsbeispiel 1, welches ähnlich wirksam wie das Marktprodukt Sokalan CP 5 ist
Weitere Vorteile und Ausführungsformen der Erfindung ergeben sich aus den nachfolgenden Ansprüchen.

## Patentansprüche

**1.** Wasserlösliche Pfropfcopolymerisate von Monosacchariden, Oligosacchariden, Polysacchariden und deren Derivaten, ausgenommen Stärkexanthate, die erhältlich sind durch radikalisch initiierte Copolymerisation von

A) Monomermischungen aus

a) mehr als 40 - 100 Gew.-% mindestens eines $\alpha$-$\beta$-ungesättigten Aldehyds der allgemeinen Formel I

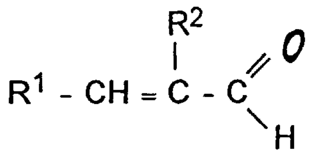

(I),

worin $R^1$ Wasserstoff oder $C_1$-$C_4$-Alkyl, linear oder verzweigt, und $R^2$ Wasserstoff oder Methyl bedeutet,

b) 0 - 60 Gew.-% von a) verschiedenen monoethylenisch ungesättigten Monomeren, die mit a) copolymerisierbar sind, und

c) 0 - 5 Gew.-% mindestens zwei ethylenisch ungesättigte, nicht konjugierte Doppelbindungen im Molekül aufweisenden Monomeren

in Gegenwart von

B) Monosacchariden, Oligosacchariden, Polysacchariden, oxidativ, hydrolytisch oder enzymatisch abgebauten Polysacchariden, chemisch modifizierten Mono-, Oligo- oder Polysacchariden oder Mischungen der genannten Verbindungen
und

C) einem oder mehreren Oxidationsmitteln,

wobei das Gewichtsverhältnis A) zu B) von (95 : 20) bis (5 : 80) reicht und das Oxidationsmittel C) in einem Gewichtsverhältnis von C) zu A) + B) von (5 : 100) bis (50 : 50) eingesetzt wird.

**2.** Pfropfcopolymerisate nach Anspruch 1,
**dadurch gekennzeichnet,**
daß in der allgemeinen Formel I $R^1$ und $R^2$ Wasserstoff sind.

**3.** Pfropfcopolymerisate nach Anspruch 1 oder 2,
**dadurch gekennzeichnet,**
daß die Komponente b) Acrylsäure, Maleinsäure, Maleinsäureanhydrid, Vinylacetat und/oder eine oder mehrere monoethylenisch ungesättigte Sulfonsäuren aufweist.

**4.** Pfropfcopolymerisate nach einem oder mehreren der vorhergehenden Ansprüche,
**dadurch gekennzeichnet,**
daß die Komponente C) Wasserstoffperoxid ist.

**5.** Verfahren zur Herstellung von Pfropfcopolymerisaten von Monosacchariden, Polysacchariden und deren Derivaten, ausgenommen Stärkexanthate, durch radikalisch initiierte Copolymerisation von A) 95 bis 20 Gew.-% ethylenisch ungesättigten Monomeren in Gegenwart von B) 5 bis 80 Gew.-% mindestens eines Monosaccharids, Oligosaccharids, Polysaccharids, abgebauten oder chemisch modifizierten Mono-, Oligo- und Polysaccharids oder deren Mischungen und C) einem oder mehreren Oxidationsmitteln in einem inerten verdünnungsmittel bei Temperaturen bis zu 180 °C, wobei als ethylenisch ungesättigte Monomere A) Mischungen aus

a) mehr als 40 - 100 Gew.-% mindestens eines α-β-ungesättigten Aldehyds der allgemeinen Formel I

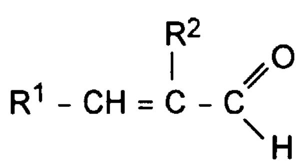

(I),

worin $R^1$ Wasserstoff oder $C_1$-$C_4$-Alkyl, linear oder verzweigt, und $R^2$ Wasserstoff oder Methyl bedeutet,

b) 0 - 60 Gew.-% von a) verschiedenen monoethylenisch ungesättigten Monomeren, die mit a) copolymerisiertbar sind, und

c) 0 - 5 Gew.-% mindestens zwei ethylenisch ungesättigte, nicht konjugierte Doppelbindungen im Molekül aufweisenden Monomeren

eingesetzt werden und das eine oder mehrere Oxidationsmittel C) in einem Gewichtsverhältnis von C) zu A) + B) von (5 : 100) bis (50 : 50) eingesetzt wird.

6. Verfahren nach Anspruch 5,
**dadurch gekennzeichnet,**
daß als Oxidationsmittel C) Wasserstoffperoxid eingesetzt wird.

7. Verfahren nach einem der Ansprüche 5 oder 6,
**dadurch gekennzeichnet,**
daß Wasserstoffperoxid zur Initiierung der radikalischen Copolymerisation eingesetzt wird.

8. Verwendung der Pfropfcopolymerisate nach einem oder mehreren der Ansprüche 1 bis 4 als Cobuilder oder Builder in Waschmitteln.

9. Verfahren zum Waschen und Reinigen von textilen Geweben,
**dadurch gekennzeichnet,**
daß ein Pfropfcopolymerisat nach einem oder mehreren der Ansprüche 1 bis 4 eingesetzt wird.

10. Wasch- und Reinigungsmittel, enthaltend ein Pfropfcopolymerisat gemäß einem oder mehreren der Ansprüche 1 bis 4.

## Claims

1. Water-soluble graft copolymers of monosaccharides, oligosaccharides, polysaccharides and their derivatives, excluding starch xanthates, which are obtainable by radically initiated copolymerisation of

A) monomer mixtures consisting of

a) more than 40 to 100 wt.% of at least one α, β-unsaturated aldehyde corresponding to the general formula I

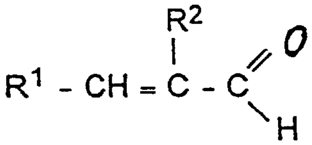 (I),

wherein $R^1$ denotes hydrogen or $C_1$-$C_4$ alkyl, linear or branched, and $R^2$ denotes hydrogen or methyl,

b) 0 to 60 wt.% of monoethylenically unsaturated monomers different from a), which are copolymerisable with a), and

c) 0 to 5 wt.% of monomers having at least two ethylenically unsaturated non-conjugated double bonds in the molecule

in the presence of

B) monosaccharides, oligosaccharides, polysaccharides, polysaccharides decomposed by oxidation, by hydrolysis or by enzymes, chemically modified mono-, oligo- or polysaccharides or mixtures of the above-mentioned compounds

and

C) one or more oxidising agents,

the weight ratio of A) to B) extending from (95 : 20) to (5 : 80) and the oxidising agent C) being used in a weight ratio of C) to A) + B) of from (5 : 100) to (50 : 50).

**2.** Graft copolymers according to claim 1,
characterised in that,
in the general formula I, $R^1$ and $R^2$ denote hydrogen.

**3.** Graft copolymers according to claim 1 or 2,
characterised in that
component b) contains acrylic acid, maleic acid, maleic anhydride, vinyl acetate and/or one or more monoethylenically unsaturated sulfonic acids.

**4.** Graft copolymers according to one or more of the preceding claims,
characterised in that
component C) is hydrogen peroxide.

**5.** Process for the preparation of graft copolymers of monosaccharides, polysaccharides and derivatives thereof, excluding starch xanthates, by radically initiated copolymerisation of A) 95 to 20 wt.% ethylenically unsaturated monomers in the presence of B) 5 to 80 wt.% of at least one monosaccharide, oligosaccharide, polysaccharide, decomposed or chemically modified mono-, oligo- and polysaccharide or mixtures thereof and C) one or more oxidising agents in an inert diluent at temperatures of up to 180°C, with mixtures of

a) more than 40 to 100 wt.% of at least one α, β-unsaturated aldehyde corresponding to the general formula I

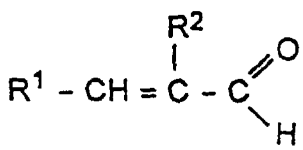

(I),

wherein $R^1$ denotes hydrogen or $C_1$-$C_4$-alkyl, linear or branched, and $R^2$ denotes hydrogen or methyl,

b) 0 to 60 wt.% of monoethylenically unsaturated monomers different from a), which are copolymerisable with a), and

c) 0 to 5 wt.% of monomers having at least two ethylenically unsaturated non-conjugated double bonds in the molecule

being used as the ethylenically unsaturated monomers A), and the one or more oxidising agents C) being used in a weight ratio of C) to A) + B) of from (5 : 100) to (50 : 50).

**6.** Process according to claim 5,
characterised in that
hydrogen peroxide is used as oxidising agent C).

**7.** Process according to one of claims 5 or 6,
characterised in that
hydrogen peroxide is used for the initiation of the radical copolymerisation.

**8.** Use of the graft copolymers according to one or more of claims 1 to 4 as cobuilders or builders in detergents.

**9.** Process for the washing and cleaning of textiles,
characterised in that

a graft copolymer according to one or more of claims 1 to 4 is used.

**10.** Detergents and cleaning agents containing a graft copolymer according to one or more of claims 1 to 4.

**Revendications**

**1.** Copolymères greffés solubles dans l'eau de monosaccharides, oligosaccharides, polysaccharides et leurs dérivés, l'exception des xanthates d'amidon, que l'on peut obtenir par copolymérisation à initiation radicalaire de

A) mélanges monomères de

a) plus de 40 à 100 % en poids d'au moins un aldéhyde α, β-insaturé de formule générale I

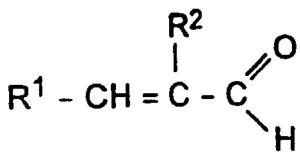

(I)

dans laquelle $R^1$ représente un hydrogène ou un alkyle en $C_1$ à $C_4$, linéaire ou ramifié, et $R^2$ représente un hydrogène ou un méthyle,
b) 0 à 60 % de monomères monoéthyléniquement insaturés différents de a), qui sont copolymérisables avec a), et a) 0 à 5 % en poids d'au moins deux monomères éthyléniquement insaturés ne présentant pas de double liaison conjuguée dans la molécule,
en présence de

B) monosaccharides, oligosaccharides, polysaccharides, polysaccharides dégradés par oxydation, par hydrolyse ou par voie enzymatique, de mono-, oligo- ou polysaccharides chimiquement modifiés ou de mélanges des composés mentionnés, et
C) un ou plusieurs oxydants,

le rapport pondéral de A) à B) étant de (95:20) à (5:80), et le rapport pondéral de C) à A) + B) étant de (5:100) à (50:50).

**2.** Copolymères greffés selon la revendication 1, caractérisés en ce que dans la formule générale I $R^1$ et $R^2$ représentent un hydrogène.

**3.** Copolymères greffés selon la revendication 2, caractérisés en ce que le composant b) présente de l'acide acrylique, de l'acide maléique, de l'anhydride maléique, de l'acétate de vinyle, et/ou un ou plusieurs acides sulfoniques monoéthyléniquement insaturés.

**4.** Copolymères greffés selon l'une ou plusieurs des revendications précédentes, caractérisés en ce que le composant C) est le peroxyde d'hydrogène.

**5.** Procédé de préparation de copolymères greffés de monosaccharides, polysaccharides et leurs dérivés, à l'exception des xanthates d'amidon, par la copolymérisation à initiation radicalaire de A) 95 à 20 % de monomères éthyléniquement insaturés en présence de B) 5 à 80 % en poids d'au moins un monosaccharide, oligosaccharide, polysaccharide, de mono-, oligo- et polysaccharides dégradés ou chimiquement modifiés ou de leurs mélanges, et C) d'un ou plusieurs oxydants dans un diluant inerte à des températures allant jusqu'à 180 C, où l'on utilise comme monomères éthyléniquement insaturés A) des mélanges de

a) plus de 40 à 100 % en poids d'au moins un aldéhyde α, β-insaturé de formule générale I

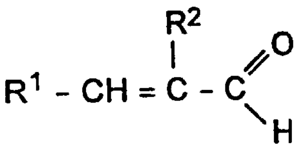 (I)

dans laquelle $R^1$ représente un hydrogène ou un alkyle en $C_1$ à $C_4$, linéaire ou ramifié, et $R^2$ représente un hydrogène ou un méthyle,
b) 0 à 60 % en poids de monomères monoéthyléniquement insaturés différents de a), qui sont copolymérisables avec a), et
c) 0 à 5 % en poids d'au moins deux monomères éthyléniquement insaturés présentant des doubles liaisons non conjuguées dans la molécule,

et où l'on utilise comme oxydant(s) C) dans un rapport pondéral de C) à A) + B) de (5:100) à (50:50).

6. Procédé selon la revendication 5, caractérisé en ce qu'on utilise comme oxydant C) le peroxyde d'hydrogène.

7. Procédé selon l'une des revendications 5 ou 6, caractérisé en ce qu'on utilise le peroxyde d'hydrogène pour l'amorçage de la copolymérisation radicalaire.

8. Utilisation des copolymères greffés selon une ou plusieurs des revendications 1 à 4 comme co-auxiliaires de détergence ou auxiliaires de détergence dans les produits de lavage.

9. Procédé de lavage et de nettoyage des tissus textiles,
caractérisé en ce qu'
on utilise un copolymère greffé selon une ou plusieurs des revendications 1 à 4.

10. Produit de lavage et de nettoyage contenant un copolymère greffé selon une ou plusieurs des revendications 1 à 4.